(19) Europäisches Patentamt
European Patent Office
Office européen des brevets

(11) **EP 3 978 259 A1**

(12) **EUROPEAN PATENT APPLICATION**
published in accordance with Art. 153(4) EPC

(43) Date of publication:
**06.04.2022 Bulletin 2022/14**

(21) Application number: **20812993.2**

(22) Date of filing: **09.03.2020**

(51) International Patent Classification (IPC):
***B41M 1/30*** (2006.01)      ***C09D 11/03*** (2014.01)

(52) Cooperative Patent Classification (CPC):
**B41M 1/30; C09D 11/023; C09D 11/03;
C09D 11/033**

(86) International application number:
**PCT/JP2020/010028**

(87) International publication number:
**WO 2020/240979 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2019   JP 2019098454
20.02.2020   JP 2020027255**

(71) Applicant: **Kao Corporation
Chuo-ku
Tokyo 103-8210 (JP)**

(72) Inventors:
• **OZAKI, Yuki
Wakayama-shi, Wakayama 640-8580 (JP)**
• **UEDA, Yasufumi
Wakayama-shi, Wakayama 640-8580 (JP)**
• **MATSUZONO, Takuto
Wakayama-shi, Wakayama 640-8580 (JP)**
• **MIZUSHIMA, Ryuma
Wakayama-shi, Wakayama 640-8580 (JP)**

(74) Representative: **Hoffmann Eitle
Patent- und Rechtsanwälte PartmbB
Arabellastraße 30
81925 München (DE)**

(54) **WATER-BASED INK FOR PRINTING WITH PRINTING PLATE**

(57)      The present invention relates to an aqueous ink for plate-based printing, which contains the following components (A) to (C) and water: (A) not less than 1% by mass and not more than 15% by mass of a pigment; (B) not less than 1% by mass and not more than 12% by mass of pigment-free crosslinked polymer particles; and (C) not less than 1% by mass and not more than 15% by mass of a water-soluble organic solvent having a boiling point of not lower than 100°C and not higher than 260°, and a plate-based printing method including the step of printing characters or images on a low-liquid absorbing printing medium using the aforementioned aqueous ink. The aqueous ink for plate-based printing according to the present invention hardly suffers from occurrence of tone jump and is excellent in anti-blocking properties even when printed on a low-liquid absorbing printing medium.

EP 3 978 259 A1

**Description**

FIELD OF THE INVENTION

The present invention relates to an aqueous ink for plate-based printing, and a plate-based printing method using the aqueous ink.

BACKGROUND OF THE INVENTION

Gravure printing, flexographic printing, typographic printing, etc., using a printing plate such as an intaglio printing plate, a lithographic printing plate, a letterpress printing plate, etc., are capable of controlling printing quality by varying a configuration of the printing plate to thereby realize high-definition printing, and therefore have been used in extensive applications.

Hitherto, an oil-based ink has been frequently used for plate-based printing such as gravure printing, etc. However, the oil-based ink has posed the problems concerning working environments, global environments, disaster prevention, etc., as well as residual solvents when used in food-related applications, etc. In addition, the gravure printing in which a large amount of the oil-based ink is used has such a problem as to hardly meet market needs of production of many kinds but a small lot of printed materials.

For this reason, there has been noticed plate-based printing using an aqueous ink. However, the aqueous ink tends to be deteriorated in drying properties or wettability to a surface of a printing plate owing to a surface tension thereof, so that there tends to occur problems such as poor transfer of the ink to the surface of the printing plate, etc. Thus, the plate-based printing using the aqueous ink tends to suffer from such a problem that a high-quality printed material can be hardly obtained thereby. In consequence, various methods have been proposed to improve these conventional problems.

For example, JP 2004-300223A (Patent Literature 1) discloses an aqueous polyurethane resin that is produced by first obtaining a water dispersion/water-soluble material of a polyurethane resin and then adding an epoxy compound as a chain extender to the resulting material to conduct the reaction therebetween, as an aqueous polyurethane resin having excellent wettability, adhesiveness and laminatability to a plastic film which is usefully used in the application fields such as inks, paints and adhesives, in particular, aqueous printing inks.

JP 2018-83938A (Patent Literature 2) discloses an aqueous gravure ink containing a pigment, a polymer, a water-soluble organic solvent, a surfactant and water in which a whole amount of the water-soluble organic solvent in the ink is not more than 15% by mass, a content of a glycol ether in the ink is 1 to 10% by mass and a content of water in the ink is 50 to 70% by mass, as an aqueous gravure ink that has a less burden on the environments and is capable of realizing high-definition printing owing to excellent leveling properties thereof. In addition, in the Patent Literature 2, an uncrosslinked polymer is used as the polymer.

SUMMARY OF THE INVENTION

The present invention relates to an aqueous ink for plate-based printing, containing the following components (A) to (C) and water:

(A) not less than 1% by mass and not more than 15% by mass of a pigment;
(B) not less than 1% by mass and not more than 12% by mass of pigment-free crosslinked polymer particles; and
(C) not less than 1% by mass and not more than 15% by mass of a water-soluble organic solvent having a boiling point of not lower than 100°C and not higher than 260°.

DETAILED DESCRIPTION OF THE INVENTION

However, the aqueous ink described in the Patent Literature 1 has posed the problem of occurrence of such a phenomenon that when transferring the aqueous ink from a printing plate to a printing medium, transfer of a given amount of the ink which would be expected upon plate making is not adequately performed, so that no proper gradation can be expressed owing to lack of continuous change in tone (gradation) from a deep color to a light color and therefore generation of stepped tone, i.e., occurrence of so-called "tone jump".

In addition, in the case where the resulting printed materials are stacked on each other, there tends to occur such a phenomenon that a printed portion thereon is peeled off from the printing medium when being unstacked from each other, i.e., so-called "blocking".

The aqueous ink described in the Patent Literature 2 has also posed problems to be improved with respect to tone jump or blocking.

For this reason, there has been a demand for an aqueous ink that can be prevented from suffering from both of tone jump and blocking, and has a less burden on the environments.

On the other hand, with the progress of packaging industries, various resin films such as a polyethylene terephthalate (PET) film, a polypropylene (PP) film, etc., have been frequently used as a printing medium. Therefore, it has also been required to improve printing quality of the ink when printed on these resin films.

The present invention relates to an aqueous ink for plate-based printing which hardly suffers from occurrence of tone jump and is excellent in anti-blocking properties even when printed on a low-liquid absorbing printing medium.

The present inventors have found that the aforementioned conventional problems can be solved by an aqueous ink in which pigment-free crosslinked polymer particles are used as a fixing agent, and a pigment, the pigment-free crosslinked polymer particles and a water-soluble organic solvent having a specific boiling point are respectively incorporated in specific amounts.

That is, the present invention relates to the following aspects [1] and [2].

[1] An aqueous ink for plate-based printing, containing the following components (A) to (C) and water:

(A) not less than 1% by mass and not more than 15% by mass of a pigment;
(B) not less than 1% by mass and not more than 12% by mass of pigment-free crosslinked polymer particles; and
(C) not less than 1% by mass and not more than 15% by mass of a water-soluble organic solvent having a boiling point of not lower than 100°C and not higher than 260°.

[2] A plate-based printing method including the step of printing characters or images on a low-liquid absorbing printing medium using the aqueous ink according to the above aspect [1].

In accordance with the present invention, it is possible to provide an aqueous ink for plate-based printing which hardly suffers from occurrence of tone jump and is excellent in anti-blocking properties even when printed on a low-liquid absorbing printing medium, and a plate-based printing method using the aqueous ink.

[Aqueous Ink for Plate-Based Printing]

The aqueous ink for plate-based printing according to the present invention (hereinafter also referred to merely as an "ink of the present invention") contains the following components (A) to (C) and water:

(A) not less than 1% by mass and not more than 15% by mass of a pigment;
(B) not less than 1% by mass and not more than 12% by mass of pigment-free crosslinked polymer particles; and
(C) not less than 1% by mass and not more than 15% by mass of a water-soluble organic solvent having a boiling point of not lower than 100°C and not higher than 260°.

The aforementioned contents of the respective components in the ink of the present invention mean the composition of the ink accommodated in an ink tank mounted to a printing apparatus used upon the printing. That is, the ink of the present invention may be maintained upon transportation or storage thereof in a such state that liquid components of the ink are concentrated, and then diluted with the liquid components such as water, etc., upon the printing, so as to control its composition to that of the ink of the present invention.

The term "aqueous" as used in the present specification means that water has a largest content among components of a medium of the ink.

The term "low-liquid absorbing" as used herein means a concept including both of low-liquid absorbing properties and non-liquid absorbing properties of a printing medium against the aqueous ink. The "low-liquid absorbing" properties may be evaluated by absorption of pure water to the printing medium. More specifically, the "low-liquid absorbing" means that a water absorption of the printing medium per a unit surface area thereof as measured by contacting the printing medium with pure water for 100 milliseconds is not less than 0 $g/m^2$ and not more than 10 $g/m^2$. The water absorption of the printing medium may be measured using an automatic scanning absorptometer.

The term "printing" as used herein means a concept that includes printing or typing operation for printing characters or images.

The aqueous ink for plate-based printing according to the present invention hardly suffers from occurrence of tone jump and is excellent in anti-blocking properties even when printed on a low-liquid absorbing printing medium. The reason why the aforementioned advantageous effects can be attained by the present invention is considered as follows, though it is not clearly determined yet.

That is, the ink of the present invention contains the water-soluble organic solvent having a boiling point of not lower than 100°C and not higher than 260° in an amount of not less than 1% by mass and not more than 15% by mass.

It is considered that by using the water-soluble organic solvent having a boiling point of not higher than 260°, the ink of the present invention can exhibit optimum drying properties on the surface of the printing medium, so that the resulting printed material can be prevented from suffering from blocking. In addition, it is considered that by using the water-soluble organic solvent having a boiling point of not lower than 100°C, excessive volatilization of the water-soluble organic solvent on a printing plate can be suppressed, and transfer of the ink from the printing plate to the printing medium can be adequately controlled, so that the resulting printed material can be prevented from suffering from occurrence of tone jump. Furthermore, it is considered that by compounding the specific amount of the aforementioned water-soluble organic solvent in the ink and using the pigment-free crosslinked polymer particles having a crosslinked structure as a fixing agent for fixing the ink onto the printing medium, the crosslinked polymer particles can be prevented from suffering from excessive swelling with the aforementioned water-soluble organic solvent, the ink can be prevented from being peeled off from the printing medium, and the release properties of the ink from the printing plate can also be controlled to an optimum level, so that the resulting printed material can be prevented from suffering from occurrence of tone jump.

Moreover, it is considered that the aforementioned water-soluble organic solvent is capable of enhancing wettability of the ink to a low-liquid absorbing printing medium and therefore can contribute to improvement in printing quality.

<(A) Pigment>

As the pigment used in the ink of the present invention, preferred are those pigments that can be maintained in such a state that pigment particles having a particle size of not more than 250 nm are dispersed in the aqueous ink. Examples of the suitable configuration of the pigment include (i) a configuration of a pigment that can be maintained in a dispersed state without using any dispersant, i.e., a configuration of a self-dispersible pigment, (ii) a configuration of pigment particles that are obtained by dispersing the pigment with a low-molecular weight or high-molecular weight surfactant, and (iii) a configuration of pigment-containing polymer particles. Among these configurations, from the viewpoint of suppressing occurrence of tone jump in the resulting printed material and improving anti-blocking properties thereof, preferred is the configuration of the pigment-containing polymer particles.

The pigment-containing polymer particles as used in the present specification mean particles having such a configuration in which the pigment is incorporated in the polymer, particles having such a configuration in which the pigment is partially exposed to a surface of respective particles formed of the polymer and the pigment, particles having such a configuration in which the polymer is adsorbed to a part of the pigment, or a mixture of particles having these configurations. Among the particles having these configurations, preferred are the particles having the configuration in which the pigment is incorporated in the polymer.

(Pigment)

The pigment used in the present invention may be either an inorganic pigment and an organic pigment. Among these pigments, preferred is an organic pigment.

Examples of the inorganic pigment include carbon blacks, metal oxides and the like. The carbon blacks are preferably used for black inks. Examples of the carbon blacks include furnace blacks, thermal lamp blacks, acetylene blacks, channel blacks and the like. As a pigment for white inks, there may be used metal oxides such as titanium dioxide, zinc oxide, silica, alumina, magnesium oxide, etc., and the like. These inorganic pigments may be subjected to surface treatments with conventionally known hydrophobilizing agents such as a titanium coupling agent, a silane coupling agent, a higher fatty acid metal salt, etc.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like.

The hue of the pigment is not particularly limited. In chromatic inks, there may be used any chromatic pigment such as a yellow pigment, a magenta pigment, a cyan pigment, a red pigment, a blue pigment, an orange pigment, a green pigment, etc.

The aforementioned pigments may be used alone or in the form of a mixture of any two or more thereof.

(Pigment-Containing Polymer Particles)

The polymer constituting the polymer particles containing the pigment (hereinafter also referred to merely as a "polymer a") is not particularly limited as long as the polymer has at least an ability of dispersing the pigment.

The polymer particles containing the pigment (hereinafter also referred to merely "pigment-containing polymer particles") are more preferably in the form of crosslinked polymer particles containing the pigment (hereinafter also referred to merely "pigment-containing crosslinked polymer particles") which are produced by further crosslinking the pigment-containing polymer particles with a crosslinking agent.

The polymer a as a polymer before being subjected to crosslinking treatment may be either a water-soluble polymer or a water-insoluble polymer. Among these polymers, preferred is a water-insoluble polymer. If the polymer used is a water-soluble polymer, the polymer is transformed into a water-insoluble polymer by subjecting the polymer to crosslinking treatment.

The term "water-insoluble" of the polymer as used in the present specification means that when the polymer is dried to a constant weight at 105°C for 2 hours and then dissolved in 100 g of water at 25°C, the solubility in water of the polymer is less than 10 g. The solubility in water of the polymer is preferably not more than 5 g and more preferably not more than 1 g. In the case where the polymer is in the form of an anionic polymer, the aforementioned solubility means a solubility of the polymer whose anionic groups are neutralized completely (i.e., 100%) with sodium hydroxide.

(Polymer a)

The polymer a is a polymer having a pigment-dispersing capability, i.e., a capability of dispersing the pigment in a water-based medium containing water as a main component. Although the polymer a may have any optional structure, from the viewpoint of improving storage stability of the ink of the present invention, the polymer a is preferably a vinyl-based polymer obtained by addition-polymerizing a vinyl monomer such as a vinyl compound, a vinylidene compound, a vinylene compound, etc.

The vinyl-based polymer preferably contains a constitutional unit derived from (a-1) an ionic monomer (hereinafter also referred to merely as a "component (a-1)"), and is more preferably in the from of a vinyl-based polymer that is produced by copolymerizing a monomer mixture A containing, in addition to the component (a-1), (a-2) a hydrophobic monomer (hereinafter also referred to merely as a "component (a-2)") (such a mixture is hereinafter also referred to merely as a "monomer mixture A"). The vinyl-based polymer contains the constitutional unit derived from the component (a-1) and a constitutional unit derived from the component (a-2).

[(a-1) Ionic Monomer]

The ionic monomer (a-1) is preferably used as a monomer component of the polymer a from the viewpoint of improving dispersion stability of the pigment in the ink of the present invention. Examples of the ionic monomer (a-1) include an anionic monomer and a cationic monomer. Among these monomers, preferred is an anionic monomer.

Examples of the anionic monomer include a carboxylic acid monomer, a sulfonic acid monomer, a phosphoric acid monomer and the ;like. Specific examples of the carboxylic acid monomer include acrylic acid, methacrylic acid, crotonic acid, itaconic acid, maleic acid, fumaric acid, citraconic acid, 2-methacryloyloxymethylsuccinic acid and the like.

Among these ionic monomers, from the sane viewpoint as described above, preferred is the carboxylic acid monomer, and more preferred is at least one monomer selected from the group consisting of acrylic acid and methacrylic acid.

[(a-2) Hydrophobic Monomer]

From the viewpoint of improving dispersion stability of the pigment in the ink of the present invention, it is preferred that in addition to the component (a-1), the hydrophobic monomer (a-2) is further used as a monomer component of the polymer a. In this case, the polymer a contains the constitutional unit derived from the component (a-1) and the constitutional unit derived from the component (a-2).

Specific examples of the component (a-2) include those monomers described in the paragraphs [0020] to [0022] of JP 2018-83938A. Among these monomers, preferred is at least one monomer selected from the group consisting of an alkyl (meth)acrylate containing an alkyl group having not less than 1 and not more than 22 carbon atoms, styrene, $\alpha$-methyl styrene and benzyl (meth)acrylate.

[(a-3) Nonionic Monomer]

A nonionic monomer (a-3) (hereinafter also referred to merely as a "component (a-3)") may be used from the viewpoint of further improving dispersion stability of the pigment in the ink of the present invention.

The component (a-3) is in the form of a polymer having high affinity to water or the water-soluble organic solvent. Examples of the component (a-3) include monomers containing a hydroxy group or a polyalkylene glycol chain.

Specific examples of the component (a-3) include those monomers described in the paragraph [0018] of JP 2018-83938A. Among these monomers, preferred is at least one monomer selected from the group consisting of methoxy polyethylene glycol (n = 1 to 30) (meth)acrylate and polypropylene glycol (n = 2 to 30) (meth) acrylate.

As to the aforementioned components (a-1) to (a-3), the monomers included in the respective components may be used alone or in the form of a mixture of any two or more thereof.

(Contents of Respective Components in Monomer Mixture A or Contents of Respective Constitutional Units in Polymer a)

The contents of the aforementioned components (a-1) to (a-3) in the monomer mixture A (contents of non-neutralized components; hereinafter also defined in the same way) as used upon production of the polymer a, or the contents of the respective constitutional units derived from the components (a-1) to (a-3) in the polymer a, are as follows, from the viewpoint of improving dispersion stability of the pigment in the resulting ink.

The content of the component (a-1) is preferably not less than 5% by mass, more preferably not less than 10% by mass and even more preferably not less than 15% by mass, and is also preferably not more than 40% by mass, more preferably not more than 30% by mass and even more preferably not more than 20% by mass.

The content of the component (a-2) is preferably not less than 30% by mass, more preferably not less than 40% by mass and even more preferably not less than 50% by mass, and is also preferably not more than 90% by mass, more preferably not more than 80% by mass and even more preferably not more than 75% by mass.

In the case where the component (a-3) is included, the content of the component (a-3) is preferably not less than 5% by mass and more preferably not less than 10% by mass, and is also preferably not more than 30% by mass and more preferably not more than 25% by mass.

The mass ratio of the component (a-1) to the component (a-2) [(a-1)/(a-2)] is preferably not less than 0.1, more preferably not less than 0.2 and even more preferably not less than 0.25, and is also preferably not more than 1.2, more preferably not more than 1.0 and even more preferably not more than 0.8.

The contents of the constitutional units derived from the components (a-1) to (a-3) in the polymer a used in the present invention not only may be determined by actual measurements thereof, but also may be indicated by substitution of respective charging ratios of the components (a-1) to (a-3) in the raw material monomer containing these components upon production of the polymer a therefor. Among these components, the content of the component (a-1) may be suitably determined by a potentiometric titration method, whereas the contents of the components (a-2) and (a-3) may be suitably indicated by substitution of the respective charging ratios of the components (a-2) and (a-3) in the raw material monomer therefor.

(Production of Polymer a)

The polymer a may be produced by copolymerizing the monomer mixture A by known polymerization methods. As the polymerization methods, preferred is a solution polymerization method.

The solvent used in the solution polymerization method is not particularly limited, and is preferably a polar solvent such as water, aliphatic alcohols having not less than 1 and not more than 3 carbon atoms, ketones, ethers, esters and the like. Among these solvents, more preferred are water, methanol, ethanol, acetone, methyl ethyl ketone and the like, and from the viewpoint of enhancing solubility of the polymer in the solvent, even more preferred is methyl ethyl ketone.

The polymerization may be carried out in the presence of a polymerization initiator or a polymerization chain transfer agent. Examples of the polymerization initiator include persulfuric acid salts, water-soluble azo polymerization initiators, and the like. Of these polymerization initiators, preferred are persulfuric acid salts such as ammonium persulfate, potassium persulfate, etc. As the polymerization chain transfer agent, preferred are mercaptans, and more preferred is 2-mercaptoethanol.

The polymerization temperature may vary depending upon the kinds of polymerization initiator, monomers and solvents used, etc. The polymerization temperature is preferably not lower than 30°C and more preferably not lower than 50°C, and is also preferably not higher than 95°C and more preferably not higher than 80°C.

The polymerization is preferably conducted in a nitrogen gas atmosphere or an inert gas atmosphere.

After completion of the polymerization reaction, the polymer thus produced may be isolated from the resulting reaction solution by conventionally known methods such as reprecipitation, removal of the solvent by distillation, etc.

The polymer a is preferably neutralized with a neutralizing agent as described hereinbelow.

The weight-average molecular weight of the polymer a is preferably not less than 10,000 and more preferably not less than 15,000, and is also preferably not more than 300,000, more preferably not more than 200,000 and even more preferably not more than 100,000, from the viewpoint of improving dispersion stability of the pigment dispersed with the polymer in the ink as well as from the viewpoint of improving fixing properties of the ink onto a printing medium.

The acid value of the polymer a is preferably not less than 50 mgKOH/g, more preferably not less than 70 mgKOH/g and even more preferably not less than 80 mgKOH/g, and is also preferably not more than 300 mgKOH/g, more preferably not more than 280 mgKOH/g and even more preferably not more than 260 mgKOH/g, from the viewpoint of improving dispersibility of the pigment as well as adsorptivity of the polymer to the pigment.

The weight-average molecular weight and the acid value of the polymer may be measured by the methods described in Examples below.

The polymer a may be a commercially available product as long as the polymer contains the constitutional unit derived from the component (a-1) and the constitutional unit derived from the component (a-2). Specific examples of the commercially available product of the vinyl-based polymer as the polymer a include styrene-acrylic resins such as "JONCRYL 67", "JONCRYL 611", "JONCRYL 678", "JONCRYL 680", "JONCRYL 690" and "JONCRYL 819" all available from BASF Japan, Ltd., and the like.

[Production of Pigment-Containing Polymer Particles]

The pigment-containing polymer particles are preferably produced in the form of a pigment dispersion A prepared by dispersing the pigment-containing polymer particles in a water-based medium, by a process including the following step I, and if required, further including the following step II, from the viewpoint of efficiently producing the polymer particles.

Step I: dissolving the polymer a in a solvent to prepare a solution of the polymer a, and then adding and mixing the pigment, if required together with a neutralizing agent, a surfactant, etc., in the resulting solution to obtain a pigment dispersion A formed of a pigment mixture.

In order to efficiently incorporate the pigment into the polymer particles, the solvent used in the step I preferably contains an organic solvent. In the case where the solvent contains the organic solvent, the process may further include the following step II in addition to the step I.

Step II: removing the organic solvent from the pigment mixture obtained in the step I to obtain the pigment dispersion A.

In addition, it is also preferred that the process includes the following step III in addition to the steps I and II.

Step III: mixing the pigment dispersion A obtained in the step I or the step II with a crosslinking agent a to subject the dispersion to crosslinking treatment, thereby obtaining pigment-containing crosslinked polymer particles.

The pigment dispersion A as used in the present specification means both of a dispersion formed by dispersing the pigment-containing polymer particles in a water-based medium and a dispersion formed by dispersing the pigment-containing crosslinked polymer particles in a water-based medium.

(Step I)

The solvent used for dissolving the polymer a in the step I is not particularly limited. However, as the solvent, from the viewpoint of improving wettability thereof to the pigment, solubility of the polymer a therein and adsorptivity thereof to the pigment, preferred is at least one solvent selected from the group consisting of water, aliphatic alcohols having not less than 1 and not more than 3 carbon atoms, ketones, ethers, esters and the like, more preferred is at least one solvent selected from the group consisting of water and ketones, and even more preferred is a combination of water and the ketone. When the polymer a is synthesized by a solution polymerization method, the solvent used in the polymerization method may be directly used as such in the step I.

In the case where the polymer a is an anionic polymer, anionic groups contained in the polymer a are preferably neutralized using a neutralizing agent. When using the neutralizing agent, the anionic groups contained in the polymer a are neutralized such that the pH value of the resulting dispersion preferably falls within the range of not less than 7 and not more than 11. Examples of the neutralizing agent include bases such as lithium hydroxide, sodium hydroxide, potassium hydroxide, ammonia, various amines and the like. In addition, the polymer a may be previously neutralized.

The degree of neutralization of the anionic groups contained in the polymer a in terms of a ratio of a mole equivalent number of the neutralizing agent to a mole equivalent number of the anionic groups contained in the polymer a is preferably not less than 30 mol%, more preferably not less than 40 mol% and even more preferably not less than 50 mol%, and is also preferably not more than 300 mol%, more preferably not more than 200 mol% and even more preferably not more than 150 mol%, from the viewpoint of improving storage stability of the ink of the present invention.

In the step I, the resulting pigment mixture is preferably subjected to dispersion treatment by applying a mechanical force thereto. The method for applying a mechanical force to the pigment mixture is not particularly limited. As the method for applying a mechanical force to the pigment mixture, there may be mentioned the method described in the paragraph [0032] of JP 2018-83938A.

The apparatus used for applying a mechanical force to the pigment mixture is preferably a media-type disperser from the viewpoint of efficiently reducing a particle size of the pigment.

When conducting the dispersion treatment, by suitably adjusting a pressure used in the dispersion treatment, etc., it is possible to control the particle size of the pigment to a desired value.

(Step II)

The step II is an optional step that may be conducted in the case where the solvent used in the step I contains an organic solvent, i.e., the step of removing the organic solvent from the pigment mixture obtained in the step I to obtain the pigment dispersion A containing water.

The organic solvent is preferably substantially completely removed from the thus obtained pigment dispersion A. However, the residual organic solvent may be present in the pigment dispersion A unless the objects and advantageous effects of the present invention are adversely affected by inclusion of the residual organic solvent. The content of the residual organic solvent in the pigment dispersion A is preferably not more than 0.1% by mass and more preferably not more than 0.01% by mass.

The average particle size of the pigment-containing polymer particles in the pigment dispersion A is preferably not less than 50 nm, more preferably not less than 100 nm and even more preferably not less than 120 nm, and is also preferably not more than 350 nm, more preferably not more than 320 nm and even more preferably not more than 300 nm, from the viewpoint of improving storage stability of a black ink using carbon black as a pigment and a chromatic ink using an organic pigment as well as from the viewpoint of conducting high-definition printing.

When conducting the crosslinking treatment in the below-mentioned step III, the average particle size of the pigment-containing crosslinked polymer particles in the resulting pigment dispersion A is identical to the average particle size of the aforementioned pigment-containing polymer particles.

Incidentally, the aforementioned average particle size may be measured by the method described in Examples below.

(Step III)

The step III is the step of mixing the pigment dispersion A obtained in the step I or the step II with a crosslinking agent a to subject the dispersion to crosslinking treatment, thereby obtaining pigment-containing crosslinked polymer particles.

In the step III, carboxy groups contained in the polymer a constituting the pigment-containing polymer particles can be partially crosslinked to form a crosslinked structure on a part or whole of a surface layer portion of the respective pigment-containing polymer particles, so that the pigment-containing crosslinked polymer particles can be transformed into pigment-containing crosslinked polymer particles. It is considered that by conducting the crosslinking treatment, it is possible to suppress swelling or contraction of the polymer a which tends to adversely affect dispersion stability of the pigment, whereby the resulting ink can be improved in storage stability and further the resulting printed material can be further improved in non-occurrence of tone jump and anti-blocking properties.

In the case where the polymer a is in the form of an anionic polymer containing anionic groups, the crosslinking agent a is preferably a compound containing a functional group that is capable of reacting with the anionic groups, and more preferably a compound containing not less than 2 and not more than 6 functional groups that are capable of reacting with the anionic groups in a molecule thereof.

Examples of the suitable crosslinking agent a include a compound containing two or more epoxy groups in a molecule thereof, a compound containing two or more oxazoline groups in a molecule thereof, a compound containing two or more isocyanate groups in a molecule thereof, and the like. Among these compounds, preferred is a water-insoluble compound having a water solubility rate of not less than 50% by mass and preferably not less than 40% by mass which contains not less than 2 and not more than 4 epoxy groups in a molecule thereof, more preferred is at least one compound selected from the group consisting of trimethylolpropane polyglycidyl ether and pentaerythritol polyglycidyl ether, and even more preferred is trimethylolpropane polyglycidyl ether (water solubility rate: 27% by mass). The "water solubility rate" as used herein means a rate (% by mass) of dissolution of the crosslinking agent as measured by dissolving 10 parts by mass of the crosslinking agent in 90 parts by mass of ion-exchanged water at 25°C.

The crosslinking rate of the pigment-containing polymer in the step III as calculated in terms of a ratio of a mole equivalent number of crosslinkable functional groups of the crosslinking agent to a mole equivalent number of the carboxy groups of the polymer a is preferably not less than 10 mol%, more preferably not less than 20 mol% and even more preferably not less than 30 mol%, and is also preferably not more than 80 mol%, more preferably not more than 70 mol%, even more preferably not more than 60 mol% and further even more preferably not more than 50 mol%, from the viewpoint of improving storage srtability of the resulting ink and anti-blocking proeprties of the resulting printed material.

From the viewpoint of completing the crosslinking reaction and attaining good cost efficiency, the temperature used in the crosslinking treatment is preferably not lower than 40°C and more preferably not lower than 55°C, and is also preferably not higher than 95°C and more preferably not higher than 80°C.

The solid content of the pigment dispersion A is preferably not less than 10% by mass and more preferably not less than 15% by mass, and is also preferably not more than 45% by mass and more preferably not more than 40% by mass, from the viewpoint of improving dispersion stability of the pigment dispersion as well as from the viewpoint of facilitating production of the ink.

The solid content may be measured by the method described in Examples below.

The content of the pigment in the pigment dispersion A is preferably not less than 5% by mass, more preferably not less than 10% by mass and even more preferably not less than 15% by mass, and is also preferably not more than 45% by mass, more preferably not more than 40% by mass and even more preferably not more than 35% by mass, from the viewpoint of improving dispersion stability of the pigment dispersion.

The mass ratio of the crosslinked polymer a constituting the pigment-containing crosslinked polymer particles A to the pigment [crosslinked polymer a/pigment] in the pigment dispersion A is preferably not less than 0.1 and more preferably not less than 0.15, and is also preferably not more than 0.8 and more preferably not more than 0.5.

<(B) Pigment-Free Crosslinked Polymer Particles>

The ink of the present invention contains pigment-free crosslinked polymer particles (hereinafter also referred to merely as "crosslinked polymer particles B") from the viewpoint of suppressing occurrence of tone jump in the resulting printed material and improving anti-blocking properties of the printed material. The crosslinked polymer particles B are in the form of crosslinked polymer particles obtained by subjecting polymer particles formed of the below-mentioned polymer b to crosslinking treatment, and contain no pigment.

The polymer b before being subjected to the crosslinking treatment may be either a water-soluble polymer or a water-insoluble polymer. In any case, the polymer b after being subjected to the crosslinking treatment becomes water-insoluble.

The term "water-insoluble" of the polymer b as used herein has the same definition as that of the aforementioned polymer a.

Examples of the polymer b include a vinyl-based polymer, a urethane-based polymer, a polyester-based polymer and the like. Among these polymers, from the viewpoint of enhancing drying properties of the resulting ink on a printing medium and improving anti-blocking properties of the resulting printed material, preferred is the vinyl-based polymer.

(Polymer b)

In the case where the polymer b is a vinyl-based polymer, the polymer b is preferably a water-insoluble vinyl-based polymer that is produced by copolymerizing a "monomer mixture B" containing (b-1) an ionic monomer (hereinafter also referred to merely as a "component (b-1)") and (b-2) a hydrophobic monomer (hereinafter also referred to merely as a "component (b-2)"). The water-insoluble vinyl-based polymer contains a constitutional unit derived from the component (b-1) and a constitutional unit derived from the component (b-2).

[(b-1) Ionic Monomer]

Examples of the component (b-1) include the same monomers as described above as to the aforementioned component (a-1).

Among these monomers, from the viewpoint of improving dispersion stability of the crosslinked polymer particles B in the ink of the present invention, preferred are anionic monomers, more preferred are carboxylic acid monomers, and even more preferred is at least one monomer selected from the group consisting of acrylic acid and methacrylic acid.

[(b-2) Hydrophobic Monomer]

Examples of the component (b-2) include the same monomers as described above as to the aforementioned component (a-2).

Among these monomers, preferred is at least one monomer selected from the group consisting of an alkyl (meth)acrylate containing an alkyl group having not less than 1 and not more than 22 carbon atoms, styrene, $\alpha$-methyl styrene and benzyl (meth)acrylate.

As to the aforementioned component (b-1) and component (b-2), the monomers contained in the respective components may be used alone or in the form of a mixture of any two or more thereof.

(Contents of Respective Components in Monomer Mixture B or Contents of Respective Constitutional Units in Polymer b)

The contents of the components (b-1) and (b-2) in the monomer mixture B (contents of non-neutralized components; hereinafter also defined in the same way) upon production of the polymer b, or the contents of the constitutional units derived from the components (b-1) and (b-2) in the polymer b, are as follows.

The content of the component (b-1) is preferably not less than 1% by mass, more preferably not less than 3% by mass, even more preferably not less than 5% by mass and further even more preferably not less than 7% by mass, and is also preferably not more than 30% by mass, more preferably not more than 20% by mass, even more preferably not more than 15% by mass and further even more preferably not more than 10% by mass.

The content of the component (b-2) is preferably not less than 50% by mass, more preferably not less than 60% by mass, even more preferably not less than 70% by mass, further even more preferably not less than 80% by mass and still further even more preferably not less than 85% by mass, and is also preferably not more than 99% by mass, more preferably not more than 97% by mass, even more preferably not more than 95% by mass and further even more preferably not more than 93% by mass.

In addition, the mass ratio of the component (b-1) to the component (b-2) [(b-1)/(b-2)] is preferably not less than 0.01, more preferably not less than 0.05 and even more preferably not less than 0.1, and is also preferably not more than 0.6, more preferably not more than 0.55 and even more preferably not more than 0.5.

(Production of Polymer b)

The polymer b may be produced by copolymerizing the monomer mixture B by conventionally known polymerization methods. Examples of the polymerization methods include an emulsion polymerization method, a suspension polymerization method, and the like. Among these polymerization methods, preferred is the emulsion polymerization method.

The polymerization may be carried out in the presence of a polymerization initiator. Examples of the polymerization initiator include persulfuric acid salts, water-soluble azo polymerization initiators and the like. Among these polymerization initiators, preferred are persulfuric acid salts such as ammonium persulfate and potassium persulfate.

The polymerization may also be carried out in the presence of a surfactant such as a nonionic surfactant, an anionic surfactant, a cationic surfactant, etc. Among these surfactants, from the viewpoint of improving dispersion stability of the polymer particles, preferred is the anionic surfactant. Specific examples of the anionic surfactant include fatty acid salts, alkylbenzenesulfonic acid salts, polyoxyethylene alkylethersulfuric acid ester salts, and the like.

The polymer b may also be produced by the polymerization method that is conducted in the presence of a solvent capable of dissolving both of the monomer mixture B and the polymer b, i.e., by a so-called solution polymerization method. In this case, as the solvent, there may be used conventionally known solvents such as alcohols, ketones, hydrocarbons and the like. In addition, it is preferred that the solvent used in the polymerization reaction remains in the resulting reaction solution without being removed therefrom, and is subsequently used in a water dispersion of the polymer particles using water as a main dispersing medium.

The polymer b is preferably neutralized with a neutralizing agent. Examples of the neutralizing agent include alkali metal hydroxides, ammonia, organic amine compounds and the like. Among these neutralizing agents, preferred are sodium hydroxide and dimethylaminoethanol.

The degree of neutralization of the anionic groups contained in the polymer b in terms of a ratio of a mole equivalent number of the neutralizing agent to a mole equivalent number of the anionic groups contained in the polymer b is preferably not less than 10 mol% and more preferably not less than 30 mol%, and is also preferably not more than 150 mol% and more preferably not more than 120 mol%, from the viewpoint of improving dispersion stability of the crosslinked polymer particles B.

The method of forming the crosslinked structure of the crosslinked polymer particles B is not particularly limited.

For example, the crosslinked structure of the crosslinked polymer particles B may be formed upon preparation of the polymer b by the method (i) of copolymerizing the monomer mixture B further containing a crosslinkable monomer in addition to the component (b-1) and the component (b-2) to obtain the crosslinked polymer particles B. As the crosslinkable monomer used above, preferred is a compound containing 2 or more vinyl groups in a molecule thereof.

In addition, the crosslinked structure of the crosslinked polymer particles B may also be formed by the method (ii) of first copolymerizing a monomer mixture B' containing the component (b-1) and the component (b-2) but containing no crosslinkable monomer to obtain a water-insoluble vinyl polymer, and then reacting the water-insoluble vinyl polymer with a crosslinking agent b which is capable of reacting with a functional group contained in the water-insoluble vinyl polymer. In the case where the component (b-1) is a carboxylic acid, as the crosslinking agent b, preferred is a compound containing 2 or more epoxy groups in a molecule thereof.

Among the aforementioned methods, from the viewpoint of improving convenience upon production of the crosslinked polymer particles B, preferred is the method (ii).

The crosslinked polymer particles B are preferably compounded in the ink of the present invention in the form of a dispersion of the crosslinked polymer particles B, preferably a water dispersion thereof. The method of preparing the water dispersion of the crosslinked polymer particles B from the polymer b is not particularly limited. Concretely, as the aforementioned preparation method, there may be mentioned the method of subjecting an organic solvent solution of the polymer b to phase inversion emulsification to obtain the water dispersion of the crosslinked polymer particles B, the method of directly using the polymer b solution produced by the emulsion polymerization as such, the method of once preparing an aqueous solution of the polymer b and then reducing water solubility of the polymer b in the aqueous solution to thereby obtain the water dispersion of the crosslinked polymer particles B, and the like.

The average particle size of the crosslinked polymer particles B in the form of a water dispersion thereof used in the ink of the present invention is preferably not less than 10 nm, more preferably not less than 20 nm and even more preferably not less than 30 nm, and is also preferably not more than 300 nm, more preferably not more than 200 nm, even more preferably not more than 150 nm and further even more preferably not more than 100 nm, from the viewpoint of ensuring good storage stability of the ink of the present invention.

Incidentally, the average particle size of the crosslinked polymer particles B may be measured by the method described in Examples below.

The weight-average molecular weight of the polymer b constituting the crosslinked polymer particles B tends to be hardly measured owing to the crosslinked structure thereof. When measuring a portion of the polymer b which can be dissolved in a solvent used in such a molecular weight measuring method by GPC as described in Examples below, the weight-average molecular weight of the polymer b is preferably not less than 200,000, more preferably not less than 300,000 and even more preferably not less than 400,000, and is also preferably not more than 2,500,000, more preferably not more than 1,000,000 and even more preferably not more than 600,000.

The acid value of the polymer after being crosslinked which constitutes the crosslinked polymer particles B is preferably not less than 10 mgKOH/g, more preferably not less than 50 mgKOH/g and even more preferably not less than 100 mgKOH/g, and is also preferably not more than 300 mgKOH/g, more preferably not more than 250 mgKOH/g and even more preferably not more than 200 mgKOH/g, from the viewpoint of improving stability of the resulting ink.

Meanwhile, the weight-average molecular weight and the acid value of the polymer may be measured by the methods described in Examples below.

In addition, the polymer a constituting the pigment-containing polymer particles and the polymer b constituting the crosslinked polymer particles B may be the same or different from each other. The crosslinking agent a and the crosslinking agent b may also be the same or different from each other. More specifically, the polymer a and the polymer b may be different in their composition from each other, or may be identical to each other regarding all characteristics including their composition, etc., but different from each other only regarding inclusion or non-inclusion of the pigment.

As the polymer b, there may also be used commercially available products.

<(C) Water-Soluble Organic Solvent>

The aqueous ink for plate-based printing according to the present invention contains a water-soluble organic solvent having a boiling point of not lower than 100°C and not higher than 260°C from the viewpoint of suppressing occurrence of tone jump in the resulting printed material and improving anti-blocking properties of the printed material.

The "water-soluble organic solvent" as used herein means an organic solvent having a solubility in water of not less than 10 mL as measured by dissolving the organic solvent in 100 mL of water at 25°C. The water-soluble organic solvent may be present either in a liquid state or in a solid state at an ordinary temperature (25°C).

The boiling point of the water-soluble organic solvent is preferably not lower than 110°C, more preferably not lower than 115°C, even more preferably not lower than 120°C, further even more preferably not lower than 130°C, still further even more preferably not lower than 140°C and furthermore preferably not lower than 150°C from the viewpoint of improving anti-blocking properties of the resulting printed material, and is also preferably not higher than 250°C, more preferably not higher than 245°C, even more preferably not higher than 240°C and further even more preferably not higher than 235°C from the viewpoint of improving anti-blocking properties of the resulting printed material.

The "boiling point" as used herein means a normal boiling point (boiling point as measured at 1 atm), and may be measured according to JIS K2254. In the case where two or more water-soluble organic solvents are used as the aforementioned water-soluble organic solvent, the boiling point of the water-soluble organic solvent is a weighted mean value of boiling points of the two or more water-soluble organic solvents which are weighted by contents (% by mass) of the respective water-soluble organic solvents.

The water-soluble organic solvent (C) preferably contains a glycol ether from the viewpoint of suppressing occurrence of tone jump in the resulting printed material and improving anti-blocking properties of the printed material.

The molecular weight of the glycol ether is preferably not less than 70, more preferably not less than 80 and even more preferably not less than 100, and is also preferably not more than 200, more preferably not more than 190 and even more preferably not more than 180.

The boiling point of the glycol ether is preferably not lower than 110°C, more preferably not lower than 115°C, even more preferably not lower than 120°C, further even more preferably not lower than 130°C, still further even more preferably not lower than 140°C and furthermore preferably not lower than 150°C, and is also preferably not higher than 250°C, more preferably not higher than 245°C, even more preferably not higher than 240°C and further even more preferably not higher than 235°C, from the same viewpoint as described above.

As the glycol ether, preferred is at least one compound selected from the group consisting of an alkylene glycol monoalkyl ether and an alkylene glycol dialkyl ether, and more preferred is an alkylene glycol monoalkyl ether.

The number of carbon atoms of an alkyl group contained in the glycol ether is not less than 1 and preferably not less than 2, and is also preferably not more than 6, more preferably not more than 4 and even more preferably not more than 3. The alkyl group contained in the glycol ether may be either linear or branched.

Examples of the alkylene glycol monoalkyl ether include ethylene glycol monoalkyl ethers such as ethylene glycol monomethyl ether, ethylene glycol monoisopropyl ether, ethylene glycol monobutyl ether, ethylene glycol monoisobutyl ether, etc.; diethylene glycol monoalkyl ethers such as diethylene glycol monomethyl ether, diethylene glycol monoisopropyl ether, diethylene glycol monobutyl ether, diethylene glycol monoisobutyl ether, etc.; propylene glycol monoalkyl ethers such as propylene glycol monomethyl ether, propylene glycol monopropyl ether, etc.; dipropylene glycol monoalkyl ethers such as dipropylene glycol monomethyl ether, etc.; and tripropylene glycol monoalkyl ethers such as tripropylene glycol monomethyl ether, etc.

Examples of the alkylene glycol dialkyl ether include diethylene glycol dimethyl ether, diethylene glycol methyl ethyl ether, diethylene glycol diethyl ether, triethylene glycol dimethyl ether and the like.

These glycol ethers may be used alone or in combination of any two or more thereof.

Of these glycol ethers, from the viewpoint of suppressing occurrence of tone jump in the resulting printed material and improving anti-blocking properties of the printed material, preferred is at least one compound selected from the group consisting of ethylene glycol monomethyl ether (125°C), ethylene glycol monoisopropyl ether (142°C), ethylene glycol monobutyl ether (171°C), diethylene glycol monomethyl ether (194°C), diethylene glycol monoisopropyl ether (207°C), diethylene glycol monobutyl ether (230°C), diethylene glycol monoisobutyl ether (220°C), dipropylene glycol monomethyl ether (187°C), tripropylene glycol monomethyl ether (220°C), diethylene glycol dimethyl ether (162°C), diethylene glycol methyl ethyl ether (176°C) and diethylene glycol diethyl ether (189°C), and more preferred is at least one compound selected from the group consisting of ethylene glycol monomethyl ether, ethylene glycol monoisopropyl ether, ethylene glycol monobutyl ether, diethylene glycol monomethyl ether, diethylene glycol monoisopropyl ether, diethylene glycol monobutyl ether and diethylene glycol monoisobutyl ether. Incidentally, the numeral values in the aforementioned parentheses indicate boiling points of the respective compounds.

The aforementioned water-soluble organic solvent may also contain the other water-soluble organic solvent than the glycol ether. Examples of the other water-soluble organic solvent include alcohols, divalent or higher-valent polyhydric alcohols such as glycols, etc., and cyclic amide compounds such as *N*-methyl 2-pyrrolidone, 2-pyrrolidone, etc. However, it is preferred that the water-soluble organic solvent contains the glycol ether solely.

In addition, the ink of the present invention may also contain a water-soluble organic solvent having a boiling point lower than 100°C or a water-soluble organic solvent having a boiling point higher than 260°C unless the advantageous effects of the present invention are adversely affected by inclusion thereof. Examples of the water-soluble organic solvent having a boiling point lower than 100°C include monohydric alcohols such as ethanol, 2-propanol (isopropyl alcohol), 1-propanol (*n*-propyl alcohol), and the like. Examples of the water-soluble organic solvent having a boiling point higher than 260°C include triethylene glycol (boiling point: 285°C), tripropylene glycol (boiling point: 273°C), glycerin (boiling point: 290°C) and the like.

<Surfactant>

The aqueous ink for plate-based printing according to the present invention preferably further contains a surfactant from the viewpoint of suppressing occurrence of tone jump in the resulting printed material and improving anti-blocking properties of the printed material.

Examples of the surfactant include an anionic surfactant, a nonionic surfactant, an amphoteric surfactant and the like. Among these surfactants, preferred is a nonionic surfactant, more preferred is at least one surfactant selected from the group consisting of an acetylene glycol-based surfactant and a silicone-based surfactant, and it is even more preferred that the acetylene glycol-based surfactant and the silicone-based surfactant are used in combination with each other.

(Acetylene Glycol-Based Surfactant)

As the acetylene glycol-based surfactant, from the same viewpoint as described above, preferred are an acetylene glycol having not less than 8 and not more than 22 carbon atoms and an ethyleneoxide adduct thereof, and more preferred is an acetylene glycol having not less than 8 and not more than 22 carbon atoms. The number of carbon atoms in the aforementioned acetylene glycol is preferably not less than 10 and more preferably not less than 12, and is also preferably not more than 20, more preferably not more than 18 and even more preferably not more than 16.

The HLB (hydrophile-lipophile balance) value of the acetylene glycol-based surfactant is preferably not less than 0, more preferably not less than 1, even more preferably not less than 2 and further even more preferably not less than 2.5, and is also preferably not more than 5.5, more preferably not more than 5.0 and even more preferably not more than 4.5.

The "HLB value" as used herein may be measured by a Griffin method.

Specific examples of the acetylene glycol-based surfactant include acetylene-based diols such as 2,4,7,9-tetramethyl-5-decyne-4,7-diol, 3,6-dimethyl-4-octyne-3,6-diol, 3,5-dimethyl-1-hexyne-3-ol, 2,4-dimethyl-5-hexyne-3-ol, 2,5-dimethyl-3-hexyne-2,5-diol, 2,5,8,11-tetramethyl-6-dodecyne-5,8-diol, etc., and ethyleneoxide adducts of these compounds. Examples of commercially available products of the acetylene glycol-based surfactant include "SURFYNOL" series products and "OLFINE" series products both available from Air Products & Chemicals, Inc., and "ACETYLENOL" series products available from Kawaken Fine Chemicals Co., Ltd., and the like.

Of these commercially available products of the acetylene glycol-based surfactant, preferred are "SURFYNOL 104" (2,4,7,9-tetramethyl-5-decyne-4,7-diol; HLB: 3), "SURFYNOL 104E" (a 50% ethylene glycol-diluted solution of "SURFYNOL 104"), "SURFYNOL 104PG-50" (a 50% propylene glycol-diluted solution of "SURFYNOL 104"), "SURFYNOL 420" (an EO adduct of "SURFYNOL 104" whose average molar number of addition of EO is 1.3; HLB: 4.7), "ACETYLENOL E13T" (average molar number of addition of EO: 1.3; HLB: 4.7), and the like.

(Silicone-Based Surfactant)

Examples of the silicone-based surfactant include dimethyl polysiloxane, a polyether-modified silicone, an amino-modified silicone, a carboxy-modified silicone, and the like. Of these surfactants, from the viewpoint of suppressing occurrence of tone jump in the resulting printed material and improving anti-blocking properties of the printed material, preferred is a polyether-modified silicone.

The polyether-modified silicone has such a structure that a hydrocarbon group bonded to a side chain and/or a terminal end of a silicone oil is substituted with a polyether group. Examples of the suitable polyether group of the polyether-modified silicone include a polyethyleneoxy group, a polypropyleneoxy group and a polyalkyleneoxy group formed by addition-bonding an ethyleneoxy group (EO) and a propyleneoxy group (PO) to each other in a block form or a random form. More specifically, as the polyether-modified silicone, there may be used a compound formed by grafting a polyether group to a main chain of a silicone, a compound formed by bonding a silicone and a polyether group to each other in a block form, and the like.

The HLB value of the polyether-modified silicone-based surfactant is preferably not less than 2, more preferably not less than 3 and even more preferably not less than 4 from the same viewpoint as described above.

Specific examples of the polyether-modified silicones include PEG-3 dimethicone, PEG-9 dimethicone, PEG-9 PEG-9 dimethicone, PEG-9 methyl ether dimethicone, PEG-10 dimethicone, PEG-11 methyl ether dimethicone, PEG/PPG-20/22 butyl ether dimethicone, PEG-32 methyl ether dimethicone, PEG-9 polydimethylsiloxyethyl dimethicone, lauryl PEG-9 polydimethylsiloxyethyl dimethicone and the like. Of these the polyether-modified silicones, preferred is PEG-11 methyl ether dimethicone.

Specific examples of commercially available products of the polyether-modified silicones include "KF-6011", "KF-6012", "KF-6013", KF-6015", "KF-6016", "KF-6017", "KF-6028", "KF-6038" and "KF-6043" all available from Shin-Etsu Chemical Co., Ltd., and the like.

[Production of Aqueous Ink for Plate-Based Printing]

The aqueous ink for plate-based printing according to the present invention may be efficiently produced by mixing the pigment, preferably the pigment-containing polymer particles, more preferably the pigment dispersion A thereof, the pigment-free crosslinked polymer particles B, preferably the water dispersion of the pigment-free crosslinked polymer particles B, and the water-soluble organic solvent, if required together with the surfactant and further with the other organic solvent, etc. The method of mixing these components is not particularly limited. In addition, the contents or concentrations of the respective components in the ink of the present invention may be controlled to those used upon the printing, and the thus prepared ink may be directly used for the printing. Alternatively, a base ink prepared previously may be diluted with water, etc., to prepare the ink containing the respective components whose contents or concentrations are controlled to those used upon the printing.

The contents of the respective components in the aqueous ink for plate-based printing according to the present invention as well as properties of the ink are as follows. Meanwhile, the contents of the respective components in the ink indicate contents thereof in the ink used upon printing.

(Content of Pigment)

The content of the pigment in the ink of the present invention is not less than 1% by mass, preferably not less than 2% by mass, more preferably not less than 3% by mass and even more preferably not less than 5% by mass, and is also not more than 15% by mass, preferably not more than 13% by mass, more preferably not more than 10% by mass and even more preferably not more than 9% by mass, from the viewpoint of enhancing optical density of the resulting ink.

(Content of Pigment-Containing Polymer Particles)

The content of the pigment-containing polymer particles in the ink of the present invention is preferably not less than 3% by mass, more preferably not less than 5% by mass and even more preferably not less than 7% by mass from the viewpoint of enhancing optical density of the resulting ink, and is also preferably not more than 25% by mass, more preferably not more than 20% by mass and even more preferably not more than 15% by mass from the viewpoint of improving storage stability of the resulting ink.

The content of the polymer a in the ink of the present invention is preferably not less than 0.1% by mass, more preferably not less than 0.2% by mass and even more preferably not less than 0.5% by mass, and is also preferably not more than 10% by mass, more preferably not more than 5% by mass and even more preferably not more than 3% by mass, from the viewpoint of suppressing occurrence of tone jump in the resulting printed material.

The mass ratio of the polymer a to the pigment [polymer a/pigment] in the ink of the present invention is preferably not less than 0.06, more preferably not less than 0.1, even more preferably not less than 0.15 and further even more preferably not less than 0.18, and is also preferably not more than 1, more preferably not more than 0.8, even more preferably not more than 0.7 and further even more preferably not more than 0.5, from the viewpoint of improving storage stability of the resulting ink. In this case, if the polymer a contains the crosslinking agent a as a component thereof, the mass of the polymer a means a total mass of the polymer a including a mass of the crosslinking agent a.

(Content of Crosslinked Polymer Particles B)

The content of the crosslinked polymer particles B in the ink of the present invention is not less than 1% by mass, preferably not less than 2% by mass, more preferably not less than 4% by mass and even more preferably not less than 6% by mass, and is also not more than 12% by mass, preferably not more than 11% by mass, more preferably not more than 10.7% by mass, even more more preferably not more than 10% by mass, further even more more preferably not more than 9% by mass and still further even more more preferably not more than 8.5% by mass, from the viewpoint of suppressing occurrence of tone jump in the resulting printed material and improving anti-blocking properties of the printed material.

The mass ratio of the polymer to the pigment [polymer/pigment] in the ink of the present invention is preferably not less than 0.2, more preferably not less than 0.4, even more preferably not less than 0.6 and further even more preferably not less than 0.8, and is also preferably not more than 4, more preferably not more than 3, even more preferably not more than 2 and further even more preferably not more than 1.8, from the viewpoint of improving stability of the resulting ink.

Meanwhile, in the case where the ink of the present invention contains the pigment-containing polymer particles and the crosslinked polymer particles B, the amount of the polymer in the aforementioned mass ratio [polymer/pigment] means a total amount of the polymer a and the polymer b. In this case, if both the polymer a and the polymer b are neutralized, the amount of the polymer in the aforementioned mass ratio is calculated as a total mass of these polymers including masses of the respective neutralizing agents used therefor.

(Content of Water-Soluble Organic Solvent)

The content of the water-soluble organic solvent having a boiling point of not lower than 100°C and not higher than 260°C in the ink of the present invention is not less than 1% by mass, preferably not less than 2% by mass and more preferably not less than 3% by mass, and is also not more than 15% by mass, preferably not more than 10% by mass, more preferably not more than 9% by mass and even more preferably not more than 8% by mass, from the viewpoint of suppressing occurrence of tone jump in the resulting printed material and improving anti-blocking properties of the printed material.

From the same viewpoint as described above, the content of the glycol ether having a boiling point of not lower than 100°C and not higher than 260°C in the ink of the present invention is preferably not less than 1% by mass, more preferably not less than 2% by mass and even more preferably not less than 3% by mass, and is also preferably not more than 15% by mass, more preferably not more than 10% by mass, even more preferably not more than 9% by mass and further even more preferably not more than 8% by mass.

The mass ratio of the aforementioned glycol ether to the whole water-soluble organic solvents [glycol ether/whole water-soluble organic solvents] in the ink of the present invention is preferably not less than 0.5, more preferably not less than 0.6 and even more preferably not less than 0.7, and is also preferably not more than 1.

The ink may also contain an organic solvent having a boiling point lower than 100°C and an organic solvent having a boiling point higher than 260°C. However, the content of each of the organic solvent having a boiling point lower than 100°C and the organic solvent having a boiling point higher than 260°C is preferably not more than 5% by mass, more preferably not more than 3% by mass, even more preferably not more than 1% by mass and further even more preferably 0% by mass, from the viewpoint of suppressing occurrence of tone jump in the resulting printed material and improving anti-blocking properties of the printed material.

(Content of Surfactant)

The content of the surfactant in the ink of the present invention is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of the resulting ink to a printing medium as well as from the viewpoint of suppressing occurrence of tone jump in the resulting printed material and improving anti-blocking properties of the printed material.

The content of the acetylene glycol-based surfactant in the ink of the present invention is preferably not less than 0.2% by mass, more preferably not less than 0.4% by mass and even more preferably not less than 0.6% by mass, and is also preferably not more than 4% by mass, more preferably not more than 3% by mass and even more preferably not more than 2% by mass, from the same viewpoint as described above.

The content of the silicone-based surfactant in the ink of the present invention is preferably not less than 0.01% by mass, more preferably not less than 0.03% by mass and even more preferably not less than 0.05% by mass, and is also preferably not more than 3% by mass, more preferably not more than 2% by mass and even more preferably not more than 1% by mass, from the same viewpoint as described above.

The mass ratio of the acetylene glycol-based surfactant to the whole surfactants [acetylene glycol-based surfactant/whole surfactants] in the ink of the present invention is preferably not less than 0.1, more preferably not less than 0.3 and even more preferably not less than 0.5, and is also preferably not more than 1.

(Content of Water)

The content of water the ink of the present invention is preferably not less than 60% by mass, more preferably not less than 65% by mass and even more preferably not less than 70% by mass from the viewpoint of improving anti-blocking properties of the resulting printed material, and is also preferably not more than 90% by mass, more preferably not more than 85% by mass and even more preferably not more than 80% by mass from the viewpoint of ensuring good optical density of the resulting ink.

In the case where the ink contains an optional component(s) other than the pigment (A), the crosslinked polymer particles (B), the water-soluble organic solvent (C) and water, such as the surfactant, etc., the other optional component(s) may be incorporated into the ink by replacing a part of the content of water therewith.

The ink of the present invention may also contain various additives as optional components, such as a pH modifier, a viscosity controller, a defoaming agent, an antiseptic agent, a rust preventive, etc., according to use or applications of the ink.

(Properties of Ink)

The Zahn cup No. 3 viscosity (efflux time (sec)) of the ink of the present invention as measured at 20°C is preferably not less than 10 seconds, more preferably not less than 12 seconds and even more preferably not less than 14 seconds, and is also preferably not more than 25 seconds, more preferably not more than 23 seconds and even more preferably not more than 20 seconds, from the viewpoint of suppressing occurrence of tone jump in the resulting printed material and improving anti-blocking properties of the printed material.

The pH value of the ink of the present invention as measured at 20°C is preferably not less than 5.5, more preferably not less than 6.0 and even more preferably not less than 6.5 from the viewpoint of improving dispersion stability of the resulting ink, and is also preferably not more than 11, more preferably not more than 10 and even more preferably not more than 9 from the viewpoint of improving the resistance of members to the ink and suppressing skin irritation.

The ink of the present invention hardly suffers from occurrence of tone jump and is excellent in anti-blocking properties, and therefore is preferably used for gravure printing.

[Plate-Based Printing Method]

The plate-based printing method of the present invention is a method of printing characters or images on a low-liquid absorbing printing medium using the aqueous ink of the present invention.

Examples of the plate-based printing method include a gravure printing method, a flexographic printing method, a typographic printing method, etc., using a printing plate such as an intaglio printing plate, a lithographic printing plate, a letterpress printing plate, etc. By printing characters or images on a printing medium by a gravure printing method using the ink of the present invention, it is possible to obtain a high-definition gravure printed material that hardly suffers from occurrence of tone jump and is excellent in anti-blocking properties as well as gradation.

The gravure printing is such a printing method as explained in detail hereinunder. That is, while rotating a gravure cylinder (a gravure printing plate) on a surface of which recessed cells are formed, the aforementioned ink is fed over the surface of the gravure cylinder, and scraped off therefrom by a doctor blade fixedly mounted at a predetermined position to allow the ink to remain only within the cells. Then, a printing medium continuously fed towards the gravure cylinder is pressure-contacted to the surface of the gravure cylinder by means of an impression cylinder whose surface is formed of a rubber to thereby transfer only the ink in the cells of the gravure cylinder to the printing medium and thereby print characters or images on the printing medium.

It is not required to dilute the ink of the present invention with a solvent upon printing, and the upper limit of the whole amount of the water-soluble organic solvents having a boiling point of not lower than 100°C and not higher than 260°C contained in the ink is 15% by mass, and it is therefore possible to reduce a burden on environments.

(Printing Medium)

Examples of the low-liquid absorbing printing medium used in the plate-based printing method of the present invention include a processed paper, a synthetic paper, an art paper, a low-liquid absorbing coated paper, a resin film and the like.

Examples of the coated paper include a versatile glossy coated paper, a multi-color foam glossy coated paper, and the like.

As the resin film, there may be used a transparent synthetic resin film. Examples of the resin film include those resin films formed of polyester, polypropylene, polyethylene, polystyrene, polyvinyl chloride, polyamide and the like.

Among these printing media, from the viewpoint of expanding use of the resulting printed material to packaging application fields and enhancing optical density of the ink, preferred is a resin film. In addition, from the viewpoint of improving applicability to after-processing treatments such as punching treatment after being printed, etc., preferred are a polyester film and a polypropylene film. These resin films may be in the form of either a biaxially oriented film, a monoaxially oriented film or a non-oriented film.

Among these printing media, from the viewpoint of improving gravure printability, more preferred are a polyethylene terephthalate (PET) film subjected to corona discharge treatment and a biaxially oriented polypropylene (OPP) film subjected to corona discharge treatment.

EXAMPLES

In the following Production Examples, Examples and Comparative Examples, the "part(s)" and "%" indicate "part(s) by mass" and "% by mass", respectively, unless otherwise specified. Meanwhile, the respective properties, etc., were measured by the following methods.

(1) Measurement of Weight-Average Molecular Weight of Polymer

The weight-average molecular weight of the polymer was measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in $N,N$-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (formed of PTFE; 0.2 $\mu$m) available from Advantec Co., Ltd.

(2) Measurement of Average Particle Sizes of Pigment-Containing Polymer Particles and Crosslinked Polymer Particles B

The cumulant analysis of the particles was conducted using a laser particle analyzing system "ELS-8000" available from Otsuka Electrics Co., Ltd., to measure an average particle size thereof. In the measurement, there was used a dispersion liquid diluted with water such that a concentration of the particles to be measured in the dispersion was adjusted to $5 \times 10^{-3}$% by weight (in terms of a solid content thereof). The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing polymer particles and the crosslinked polymer particles B.

(3) Measurement of Solid Content

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), and then a water content (%) of the sample to be measured was measured to calculate a solid content thereof according to the following formula.

$$\text{Solid Content (\%)} = 100 - \text{Water Content (\%) of Sample to be Measured}$$

(4) Measurement of Acid Value of Polymer

In an automatic potentiometric titrator (power burette; "Model No.: APB-610") available from Kyoto Electronics Manufacturing Co., Ltd., the resin was dissolved in a titrant solvent prepared by mixing toluene and acetone (2:1), and the resulting solution was subjected to titration with a 0.1N potassium hydroxide/ethanol solution by a potentiometric titration method until reaching an end point of the titration observed as an inflection point of the titration curve. The acid value of the resin was calculated from an amount (titer) of the potassium hydroxide solution used in the titration until reaching the end point.

(5) Measurement of Water Solubility Rate of Epoxy Compound

A glass tube (25 mmφ in diameter × 250 mm in height) was charged with 90 parts by mass of ion-exchanged water and 10 parts by mass (W1) of an epoxy compound at room temperature (25°C). The glass tube thus charged was allowed to stand for 1 hour in a thermostatic bath adjusted to a water temperature of 25°C. Next, the contents of the glass tube were vigorously shaken for 1 minute, and then the glass tube was placed again in the thermostatic bath and allowed to stand in the thermostatic bath for 12 hours. Then, undissolved components that were separated from water and precipitated or floated in the dispersion were recovered therefrom and then dried at 40°C under the environmental condition of a gauge pressure of -0.08 MPa for 6 hours, followed by measuring a mass (W2) of the thus dried product. The water solubility rate (% by mass) of the epoxy compound was calculated according to the following formula.
Water Solubility Rate (% by mass) = {(W1 - W2)/W1} × 100

(6) Measurement of Zahn Cup Viscosity of Aqueous Ink

The Zahn cup viscosity (efflux time (sec)) of the aqueous ink was measured at 20°C using a Zahn cup viscometer (No. 3) available from RIGO Co., Ltd.

(7) Measurement of Boiling Point of Water-Soluble Organic Solvent

The boiling point of the water-soluble organic solvent was measured according to JIS K2254, and an initial boiling point of the solvent thus meaured was defend as the boiling point of the water-soluble organic solvent.

Production Example 1 (Production of (A) Pigment-Containing Polymer Particles)

(1) Two hundred thirty six parts of ion-exchanged water were weighed and placed in a 2 L-capacity flask, and then 60 parts of a styrene-acrylic polymer "JONCRYL 690" (tradename; solid content: 20%; weight-average molecular weight: 16500; acid value: 240 mgKOH/g) available from BASF AG and 36.5 parts of a 5N sodium hydroxide solution (sodium neutralization degree: 60 mol%) were charged into the flask. The contents of the flask were stirred using an anchor blade at 200 rpm for 2 hours, thereby obtaining 332.5 parts of a polymer aqueous solution (solid content: 19.9%).
A 2 L-capacity container equipped with a disper blade was charged with 331.7 parts of the aforementioned polymer aqueous solution and 448.3 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.

(2) Next, 200 parts of a magenta pigment (C.I. Pigment Red 146) were added to the container, and the contents of the container were stirred at 6400 rpm for 1 hour. The resulting dispersion liquid was charged into a wet disperser "Ultra Apex Mill UAM05" (tradename) available from HIROSHIMA METAL & MACHINERY Co., Ltd., packed with 0.3 mmφ zirconia beads "XTZ Ball" (tradename) available from Nikkato Corporation at a packing rate of 80% by volume, and subjected to dispersion treatment by passing the dispersion liquid through the disperser 5 times at a peripheral speed of 8 m/s and a flow rate of 200 g/min while cooling the dispersion liquid with chilled water at 5°C, followed by subjecting the resulting dispersion to filtration treatment through a 200-mesh wire screen.

(3) Five hundred parts of the filtrate obtained in the above (2) (pigment: 150.0 parts; polymer: 45.0 parts) were mixed with 9.93 parts of a crosslinking agent "DENACOL EX-321L" (trimethylolpropane polyglycidyl ether; epoxy equivalent: 129; water solubility rate: 27% by mass; corresponding to 40 mol% on the basis of a carboxylic acid acting as a crosslinking reaction site contained in an acrylic acid moiety in the polymer) available from Nagase ChemteX Corporation and 1.2 parts of "PROXEL LV(S)" (mildew-proof agent; active ingredient content: 20%) available from LONZA Japan K.K., followed by further adding 91.6 parts of ion-exchanged water to the resulting mixture. The thus obtained dispersion was stirred at 70°C for 3 hours, and then subjected to filtration treatment through a 200-mesh wire screen, thereby obtaining a water dispersion of pigment-containing polymer particles (A) [yield: 602.7 parts (solid content: 34.0%; pigment: 24.9%; polymer a: 9.1%; average particle size: 280 nm)].

Production Example 2 (Production of (B) Pigment-Free Crosslinked Polymer Particles)

Ion-exchanged water was weighed in an amount of 172.8 parts and charged into a 2 L-capacity flask, and the flask was further charged with 60 parts of the styrene-acrylic polymer "JONCRYL 690" (tradename) available from BASF AG as used in Production Example 1, and 13.7 parts of dimethylaminoethanol as a neutralizing agent (neutralization degree: 60 mol%). The contents of the flask were stirred using an anchor blade at 200 rpm for 2 hours, thereby obtaining 246.5 parts of a water dispersion of pigment-free polymer particles (solid content: 29.9%).

The thus obtained water dispersion containing the water-insoluble polymer particles was mixed with 16.26 parts of "DENACOL EX-321L" (corresponding to 40 mol% on the basis of a carboxylic acid acting as a crosslinking reaction site contained in an acrylic acid moiety in the polymer) as a crosslinking agent, 1.2 parts of" PROXEL LV(S)" as a mildew-proof agent, and 40.94 parts of ion-exchanged water. The obtained dispersion was stirred at 70°C for 3 hours, and then subjected to filtration treatment through a 200-mesh wire screen, thereby obtaining a water dispersion of pigment-free crosslinked polymer particles (B) [yield: 304.9 parts (solid content: 29.9%; average particle size: 60 nm)].

The acid value of the polymer after being crosslinked constituting the pigment-free crosslinked polymer particles (B) was 186 mgKOH/g.

Production Example 3 (Production of Pigment-Free Non-Crosslinked Polymer Particles)

A part of a water dispersion (solid content: 29.9%) of such pigment-free polymer particles as formed in the course of production of the pigment-free crosslinked polymer particles in Production Example 2 was withdrawn therefrom, and obtained as a water dispersion of pigment-free non-crosslinked polymer particles.

<Preparation of Aqueous Inks>

Example 1 (Preparation of Aqueous Ink 1)

The water dispersion of the pigment-containing polymer particles (A) obtained in Production Example 1 was weighed in an amount of 29.3 parts (corresponding to a concentration of the pigment in the ink of 7.3%), and mixed with 26.6 parts of the water dispersion of the pigment-free crosslinked polymer particles (B) obtained in Production Example 2 (corresponding to a concentration of the pigment-free crosslinked polymer particles in the ink of 8%), 5 parts of diethylene glycol monoisobutyl ether (iBDG), 0.5 part of a silicone-based surfactant "KF-6011" (tradename; PEG-11 methyl ether dimethicone; HLB: 12) available from Shin-Etsu Chemical Co., Ltd., 1.0 part of an acetylene glycol-based surfactant "SURFYNOL 104PG-50" (tradename; 2,4,7,9-tetramethyl-5-decyne-4,7-diol; active ingredient content: 50%; propylene glycol solution; HLB: 3) available from Nissin Chemical Co., Ltd., and 1.7 parts of a thickening agent "ADEKANOL UH-420" (tradename; aqueous solution having an active ingredient content of 30%) available from ADEKA Corporation, and ion-exchanged water (as a balance) was further added to the obtained mixture so as to control a total amount thereof to 100 parts, followed by stirring the mixture at room temperature for 30 minutes. Then, the resulting dispersion was subjected to filtration treatment through a stainless steel wire mesh screen (200 mesh), thereby obtaining an aqueous ink 1.

The results are shown in Table 1. Incidentally, the amounts of the respective components shown in Table 1 represent amounts in terms of active ingredient contents thereof.

Examples 2 to 9 and Comparative Examples 1 to 5 (Preparation of Aqueous Inks 2 to 9 and 11 to 15)

The same procedure as in Example 1 was repeated except that the composition of the ink was changed to those shown in Table 1, thereby obtaining aqueous inks 2 to 9 and 11 to 15. The results are shown in Table 1.

Example 10 (Preparation of Aqueous Ink 10)

A reaction container was charged with 48.7 parts of a pigment dispersion containing a self-dispersible pigment "Cab-O-Jet 300" (solid content: 15%; corresponding to a pigment concentration in the ink of 7.3%) available from Cabot Speciality Chemicals, Inc., 35.8 parts of the water dispersion of the pigment-free crosslinked polymer particles (B) obtained in Production Example 2 (corresponding to a concentration of the pigment-free crosslinked polymer particles in the ink of 10.7%), 5 parts of diethylene glycol monoisobutyl ether (iBDG), 0.5 part of the aforementioned silicone-based surfactant "KF-6011" (tradename) available from Shin-Etsu Chemical Co., Ltd., 1.0 part of the aforementioned acetylene glycol-based surfactant "SURFYNOL 104PG50" (tradename; active ingredient content: 50%) available from Nissin Chemical Co., Ltd., and 1.7 parts of the aforementioned thickening agent "ADEKANOL UH-420" (tradename; aqueous solution having an active ingredient content of 30%) available from ADEKA Corporation, and ion-exchanged water (as a balance) was further added to the obtained mixture so as to control a total amount thereof to 100 parts, followed by stirring the mixture at room temperature for 30 minutes. Then, the resulting dispersion was subjected to filtration treatment through a stainless steel wire mesh screen (200 mesh), thereby obtaining an aqueous ink 10. The results are shown in Table 1.

The details of the respective organic solvents shown in Table 1 are as follows.

- iBDG; Diethylene glycol monoisobutyl ether (boiling point: 220°C)
- BDG: Ethylene glycol monobutyl ether (boiling point: 230°C)
- iPDG: Diethylene glycol monoisopropyl ether (boiling point: 207°C)
- MDG: Diethylene glycol monomethyl ether (boiling point: 194°C)
- iPG: Ethylene glycol monoisopropyl ether (boiling point: 142°C)
- MG: Ethylene glycol monomethyl ether (boiling point: 125°C)
- BTG: Triethylene glycol monobutyl ether (boiling point: 271°C)
- IPA: Isopropyl alcohol (boiling point: 83°C)

All of the aforementioned water-soluble organic solvents are products available from FUJIFILM Wako Pure Chemical Corporation.

Gravure printing was conducted as follows using the respective aqueous inks obtained in the aforementioned Examples and Comparative Examples to evaluate properties of the inks. The results are shown in Table 1.

<Printing Test>

Using the respective inks obtained in the aforementioned Examples and Comparative Examples, printing was conducted on a corona discharge-treated surface of an OPP film "FOR-AQ #20" (laminate grade) available from Futamura Chemical Co., Ltd.

Upon the printing operation, gradation printing was conducted using a bench-top gravure printing tester "K PRINTING PROOFER" available from MATSUO SANGYO Co., Ltd., equipped with a plate having 250 gravure screen lines and a cell depth of 8 μm available from Nabe Process Corporation as a gravure printing plate manufactured by a laser platemaking method. The resulting printed material was successively dried within a dryer "Drying Oven DSV402" set to 60°C available from Yamato Scientific Co., Ltd., for 10 minutes.

<Evaluation of Tone Jump>

The reflection density of a gradation image portion of the resulting printed material was measured at 10% intervals thereof using an optical densitometer "SpectroEye" available from GretagMacbeth, LLC. In the case where the difference in reflection density between the measured gradations was not less than 0.2, it was recognized that tone jump was occurred, and the degree of occurrence of tone jump was evaluated according to the following evaluation ratings.

(Evaluation Ratings)

5: No tone jump was observed on the printed material.
4: Tone jump was observed in 50% cells on the printed material.
3: Tone jump was observed in 60% cells on the printed material.
2: Tone jump was observed in 70% cells on the printed material.
1: Tone jump was observed in 80% cells on the printed material.

When the evaluation rating was 3, 4 or 5, the printed material had no problem concerning occurrence of tone jump upon practical use.

<Evaluation of Anti-Blocking Properties>

An non-printed OPP film was overlapped on the printed OPP film obtained above, and a load of 1 kg/cm$^2$ was applied to the thus overlapped films from above, followed by allowing the overlapped films to stand in the thus located state at room temperature for 12 hours. Then, the overlapped films were released from each other to examine whether or not any peel-off of the ink from the printed OPP film occurred. Thereafter, the overlapped films were further allowed to stand for 12 hours, and released again from each other to examine whether or not any peel-off of the ink from the printed OPP film occurred, and the anti-blocking properties of the resulting printed material was evaluated according to the following evaluation ratings.

(Evaluation Ratings)

3: Even after being allowed to stand for 24 hours, no peel-off of the ink occurred.
2: No peel-off occurred after being allowed to stand for 12 hours, but partial peel-off of the ink occurred after being allowed to stand for 24 hours.
1: Peel-off of the ink occurred after being allowed to stand for 12 hours.

When the evaluation rating was 2 or 3, the printed material had no problem concerning anti-blocking properties upon practical use.

TABLE 1 (part 1 of 2)

| | | | | | | Examples | | | | |
|---|---|---|---|---|---|---|---|---|---|---|
| | | | 1 | 2 | 3 | 4 | 5 | 6 | 7 | 8 |
| Kind of aqueous ink | | | 1 | 2 | 3 | 4 | 5 | 6 | 7 | 8 |
| Composition of aqueous ink compounded (%) | (A) Pigment | | | | | | | | | |
| | Pigment-containing polymer particles | Pigment | 7.3 | 7.3 | 7.3 | 7.3 | 7.3 | 7.3 | 7.3 | 7.3 |
| | | Polymer a | 2.7 | 2.7 | 2.7 | 2.7 | 2.7 | 2.7 | 2.7 | 2.7 |
| | Self-dispersible pigment ("Cab-O-Jet 300") | | | | | | | | | |
| | (B) Pigment-free crosslinked polymer particles | | 8 | 8 | 8 | 8 | 8 | 8 | 8 | 8 |
| | Pigment-free non-crosslinked polymer particles | | | | | | | | | |
| | (C) Water-soluble organic solvents having a boiling point of 100°C to 260°C *1 | iBDG (220°C) | 5 | 1 | 10 | | | | | |
| | | BDG (230°C) | | | | 5 | | | | |
| | | iPDG (207°C) | | | | | 5 | | | |
| | | MDG (194°C) | | | | | | 5 | | |
| | | iPG (142°C) | | | | | | | 5 | |
| | | MG (125°C) | | | | | | | | 5 |
| | Organic solvents other than (C) *1 | BTG (271°C) | | | | | | | | |
| | | IPA (83°C) | | | | | | | | |
| | Silicone-based surfactant | | 0.5 | 0.5 | 0.5 | 0.5 | 0.5 | 0.5 | 0.5 | 0.5 |
| | Acetylene glycol-based surfactant | | 0.5 | 0.5 | 0.5 | 0.5 | 0.5 | 0.5 | 0.5 | 0.5 |
| | Thickening agent | | 0.5 | 0.5 | 0.5 | 0.5 | 0.5 | 0.5 | 0.5 | 0.5 |
| | Ion-exchanged water | | Bal.*2 | Bal.*2 | Bal.*2 | Bal.*2 | Bal.*2 | Bal.*2 | Bal.*2 | Bal.*2 |
| Zahn cup No. 3 viscosity (sec) | | | 14 | 14 | 15 | 14 | 14 | 14 | 14 | 14 |
| Evaluation results | Tone jump | | 5 | 4 | 5 | 5 | 5 | 4 | 3 | 3 |
| | Anti-blocking properties | | 3 | 3 | 2 | 3 | 3 | 3 | 3 | 3 |

Note: *1: The numerical values in the parentheses indicate boiling points of the respective organic solvents.
*2: Balance

TABLE 1 (part 2 of 2)

| | | | Examples | | Comparative Examples | | | | |
|---|---|---|---|---|---|---|---|---|---|
| | | | 9 | 10 | 1 | 2 | 3 | 4 | 5 |
| Kind of aqueous ink | | | 9 | 10 | 11 | 12 | 13 | 14 | 15 |
| Composition of aqueous ink compounded (%) | (A) Pigment | | | | | | | | |
| | Pigment-containing polymer particles | Pigment | 7.3 | | 7.3 | 7.3 | 7.3 | 7.3 | 7.3 |
| | | Polymer a | 2.7 | | 2.7 | 2.7 | 2.7 | 2.7 | 2.7 |
| | Self-dispersible pigment ("Cab-O-Jet 300") | | | 7.3 | | | | | |
| | (B) Pigment-free crosslinked polymer particles | | 8 | 10.7 | 8 | 8 | | 8 | 14 |
| | Pigment-free non-crosslinked polymer particles | | | | | | 8 | | |
| | (C) Water-soluble organic solvents having a boiling point of 100°C to 260°C *1 | iBDG (220°C) | 4 | 5 | | | 5 | 20 | 5 |
| | | BDG (230°C) | | | | | | | |
| | | iPDG (207°C) | | | | | | | |
| | | MDG (194°C) | | | | | | | |
| | | iPG (142°C) | | | | | | | |
| | | MG (125°C) | | | | | | | |
| | Organic solvents other than (C) *1 | BTG (271°C) | | | | 5 | | | |
| | | IPA (83°C) | 1 | | | 5 | | | |
| | Silicone-based surfactant | | 0.5 | 0.5 | 0.5 | 0.5 | 0.5 | 0.5 | 0.5 |
| | Acetylene glycol-based surfactant | | 0.5 | 0.5 | 0.5 | 0.5 | 0.5 | 0.5 | 0.5 |
| | Thickening agent | | 0.5 | 0.5 | 0.5 | 0.5 | 0.5 | 0.5 | 0.5 |
| | Ion-exchanged water | | Bal.*2 | Bal.*2 | Bal.*2 | Bal.*2 | Bal.*2 | Bal.*2 | Bal.*2 |
| Zahn cup No. 3 viscosity (sec) | | | 15 | 16 | 14 | 14 | 15 | 16 | 17 |
| Evaluation results | Tone jump | | 4 | 3 | 3 | 1 | 1 | 2 | 2 |
| | Anti-blocking properties | | 3 | 2 | 1 | 3 | 3 | 3 | 3 |

Note:  *1: The numerical values in the parentheses indicate boiling points of the respective organic solvents.
　　　 *2: Balance

From the results shown in Table 1, it was confirmed that the aqueous inks obtained in the Examples, in particular, the aqueous inks 1 to 9, hardly suffered from occurrence of tone jump and were excellent in anti-blocking properties even when printed on a low-liquid absorbing printing medium, as compared to the aqueous inks 11 to 15 obtained in the Comparative Examples.

Industrial Applicability

The aqueous ink for plate-based printing according to the present invention hardly suffers from occurrence of tone jump and is excellent in anti-blocking properties even when printed on a low-liquid absorbing printing medium. The aqueous ink for plate-based printing according to the present invention is useful, in particular, for gravure printing.

**Claims**

1.　An aqueous ink for plate-based printing, comprising the following components (A) to (C) and water:

(A) not less than 1% by mass and not more than 15% by mass of a pigment;
(B) not less than 1% by mass and not more than 12% by mass of pigment-free crosslinked polymer particles; and
(C) not less than 1% by mass and not more than 15% by mass of a water-soluble organic solvent having a boiling point of not lower than 100°C and not higher than 260°.

2.　The aqueous ink for plate-based printing according to claim 1, wherein the water-soluble organic solvent (C) comprises a glycol ether.

3.　The aqueous ink for plate-based printing according to claim 2, wherein the glycol ether is at least one compound selected from the group consisting of ethylene glycol monomethyl ether, ethylene glycol monoisopropyl ether, ethylene glycol monobutyl ether, diethylene glycol monomethyl ether, diethylene glycol monoisopropyl ether, diethylene glycol monoisobutyl ether and diethylene glycol monobutyl ether.

4.　The aqueous ink for plate-based printing according to any one of claims 1 to 3, wherein the pigment (A) is in the form of pigment-containing polymer particles.

5.　The aqueous ink for plate-based printing according to claim 4, wherein the pigment (A) is in the form of particles obtained by crosslinking the pigment-containing polymer particles with a crosslinking agent.

6. The aqueous ink for plate-based printing according to claim 5, wherein the crosslinking agent is a compound comprising 2 or more epoxy groups in a molecule thereof.

7. The aqueous ink for plate-based printing according to any one of claims 1 to 6, wherein the pigment-free crosslinked polymer particles (B) are obtained by subjecting polymer particles formed of a vinyl-based polymer comprising a constitutional unit derived from an ionic monomer and a constitutional unit derived from a hydrophobic monomer to crosslinking treatment.

8. The aqueous ink for plate-based printing according to any one of claims 1 to 7, further comprising a surfactant.

9. The aqueous ink for plate-based printing according to claim 8, wherein the surfactant comprises at least one surfactant selected from the group consisting of an acetylene glycol-based surfactant and a silicone-based surfactant.

10. The aqueous ink for plate-based printing according to any one of claims 1 to 9, wherein a content of a water-soluble organic solvent having a boiling point of not higher than 100°C is not more than 4% by mass.

11. The aqueous ink for plate-based printing according to any one of claims 1 to 10, wherein the aqueous ink is used for gravure printing.

12. A use of the aqueous ink for plate-based printing according to any one of claims 1 to 10 as an ink for gravure printing.

13. A plate-based printing method comprising the step of printing characters or images on a low-liquid absorbing printing medium using the aqueous ink for plate-based printing according to any one of claims 1 to 11.

14. The plate-based printing method according to claim 13, wherein the low-liquid absorbing printing medium is a resin film.

## INTERNATIONAL SEARCH REPORT

International application No.

PCT/JP2020/010028

**A. CLASSIFICATION OF SUBJECT MATTER**
Int.Cl. B41M1/30(2006.01)i, C09D11/03(2014.01)i
FI: C09D11/03, B41M1/30D

According to International Patent Classification (IPC) or to both national classification and IPC

**B. FIELDS SEARCHED**

Minimum documentation searched (classification system followed by classification symbols)
Int.Cl. B41M1/30, C09D11/03

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2017/047267 A1 (THINK LABORATORY CO., LTD.) 23.03.2017 (2017-03-23), claims, paragraphs [0051]-[0053], [0065]-[0101], examples 1, 2, etc. | 1-14 |
| Y | paragraphs [0051]-[0053], examples 1, 2, etc. | 3, 5-6 |
| X | WO 2017/047268 A1 (THINK LABORATORY CO., LTD.) 23.03.2017 (2017-03-23), claims, paragraphs [0061]-[0063], [0073]-[0105], example 9, etc. | 1-14 |
| Y | paragraphs [0061]-[0063], example 9, etc. | 3, 5-6 |
| X | WO 2018/088560 A1 (KAO CORPORATION) 17.05.2018 (2018-05-17), claims, paragraphs [0034], [0050]-[0052], [0075]-[0091], examples, etc. | 1-14 |
| Y | paragraphs [0034], [0050]-[0052], examples, etc. | 3, 5-6 |

☒ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21.05.2020 | 02.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/010028

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2019-19292 A (KAO CORPORATION) 07.02.2019<br>(2019-02-07), claims, paragraphs [0028]-[0097],<br>examples, etc. | 1-2, 4-14<br>3 |
| X<br>Y<br>A | JP 2017-88839 A (RICOH CO., LTD.) 25.05.2017<br>(2017-05-25), claims, paragraphs [0046]-[0112],<br>examples, etc. | 1-4, 8-14<br>5-6<br>7 |
| A | JP 2019-19293 A (KAO CORPORATION) 07.02.2019<br>(2019-02-07), claims, examples, etc. | 1-14 |

Form PCT/ISA/210 (second sheet) (January 2015)

24

**INTERNATIONAL SEARCH REPORT**
Information on patent family members

International application No.

PCT/JP2020/010028

```
WO 2017/047267 A1  23.03.2017    US 2018/0244932 A1
                                 claims, paragraphs [0148]-[0153],
                                 [0178]-[0245], examples 1, 2, etc.
                                 EP 3342829 A1
                                 CN 107922763 A

WO 2017/047268 A1  23.03.2017    US 2018/0244093 A1
                                 claims, paragraphs [0169]-[0174],
                                 [0195]-[0245], example 9, etc.
                                 EP 3351397 A1
                                 CN 108025571 A

WO 2018/088560 A1  17.05.2018    US 2019/0264043 A1
                                 claims, paragraphs [0111]-[0114],
                                 [0158]-[0168], [0203]-[0246],
                                 examples, etc.
                                 EP 3540016 A1
                                 CN 109996848 A

JP 2019-19292 A    07.02.2019    (Family: none)

JP 2017-88839 A    25.05.2017    (Family: none)

JP 2019-19293 A    07.02.2019    (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004300223 A

- JP 2018083938 A